# DEMANDE DE BREVET EUROPEEN

(11) **EP 0 975 135 A1**
(43) Date de publication de la demande: **26.01.2000**
(21) Numéro de dépôt: 99401769.7
(22) Date de dépôt: 15.07.1999
(51) Int. Cl.: H04M 3/50, H04M 1/72, H04Q 7/26

(54) **Base de téléphonie analogique à sélection directe d'usagers à l'arrivée**

(30) Priorité: 23.07.1998 FR 9809400
(71) Demandeur: SAGEM SA, 75116 Paris (FR)
(72) Inventeur: Frederic, Alain, 95610 Eragny Sur Oise (FR)
(74) Mandataire: Bloch, Gérard

(57) **Abrégé**

La base de téléphonie analogique, reliant une ligne analogique (20) d'un réseau téléphonique à une pluralité de combinés téléphoniques (4) d'un réseau radio domotique, comporte des circuits (32, 33, 34, 132, 133, 134) d'extraction de données d'une numérotation complémentaire d'une numérotation d'abonné, dans des trains de signaux d'appel provenant de la ligne (20), et un automate (316) de redirection d'appels vers les combinés (4), commandé par des circuits (311) d'analyse des données extraites.

## Description

La présente invention concerne la sélection directe à l'arrivée (SDA) dans une base d'un réseau téléphonique commuté analogique, RTC, desservant plusieurs usagers.

On connaît déjà la sélection directe à l'arrivée en liaison notamment avec les réseaux numériques à intégration de services RNIS, pour atteindre directement, depuis le réseau, des postes téléphoniques qui y sont reliés à travers un concentrateur de lignes, ou autocommutateur. De tels postes sont appelés postes supplémentaires car ils n'ont pas de ligne "réseau" réservée et donc, a priori, pas de numéro d'appel.

Pour cependant permettre l'appel de tels postes, l'opérateur du réseau attribue au concentrateur un numéro de groupe, plus court qu'un numéro classique de poste. Lors d'un appel vers l'un des postes supplémentaires, le réseau appelle le concentrateur dès qu'il a reçu le numéro de groupe et lui transmet la fin du numéro, ou suffixe, qui permet au concentrateur de renvoyer l'appel en le transmettant jusqu'au poste supplémentaire désigné.

Cependant, un tel service ne s'applique qu'à des concentrateurs ou autocommutateurs numériques d'un réseau RNIS, disposant en permanence d'un canal de signalisation avec le réseau, et pas à une simple base analogique de raccordement au réseau analogique RTC de combinés radio.

Une solution classique pour atteindre directement un combiné à travers le réseau RTC consiste à munir la base d'un répondeur vocal invitant tout appelant à composer une numérotation complémentaire multifréquence (DTMF) spécifiant le numéro local du combiné. Un récepteur de signaux DTMF dans la base commande alors un automate de redirection d'appels vers les combinés.

Cette dernière exploitation présente cependant des inconvénients.

En effet, comme la base doit prendre la ligne, en réponse à un appel, pour établir la communication afin de recevoir la numérotation DTMF, l'appel est toujours taxé, même si le combiné ne répond pas, et en outre une liaison est alors inutilement immobilisée dans le réseau. De plus, la base doit comporter un récepteur DTMF et cette exploitation n'est possible que si l'appelant dispose d'un poste multifréquence.

La présente invention vise à proposer une base de téléphonie analogique à sélection directe d'usagers à l'arrivée.

A cet effet, l'invention concerne une base de téléphonie analogique, pour relier une ligne analogique d'un réseau téléphonique à une pluralité de combinés téléphoniques d'un réseau radio domotique, comportant des moyens d'extraction de données d'une numérotation complémentaire d'une numérotation d'abonné, dans des trains de signaux d'appel provenant de la ligne, et un automate de redirection d'appels vers les combinés, base caractérisée par le fait qu'elle comporte des moyens d'analyse des données extraites, agencés pour commander l'automate.

Ainsi, un réseau téléphonique prévu pour des numéros d'appel de longueur déterminée, par exemple dix chiffres, dont le nombre d'abonnés, pouvant être appelés directement, était donc en principe limité de ce fait, peut maintenant être étendu sans limites puisque la base permet de raccorder un nombre quelconque de combinés qui peuvent être appelés automatiquement, avec un suffixe de taille adaptée, transmis dans les données. Le réseau en lui-même transmet simplement les suffixes, sans devoir les interpréter.

L'invention sera mieux comprise à l'aide de la description suivante de la base de l'invention, en référence au dessin annexé, sur lequel
- la figure 1 est un schéma par blocs d'un système téléphonique intégré comportant un réseau téléphonique commuté auquel est raccordée la base de téléphonie,
- la figure 2 est un schéma par blocs fonctionnels représentant la base de la figure 1,
- la figure 3 illustre les signaux de ligne reçus par la base, et
- la figure 4 est un diagramme de cheminement illustrant le séquencement du traitement des signaux de ligne reçus par la base.

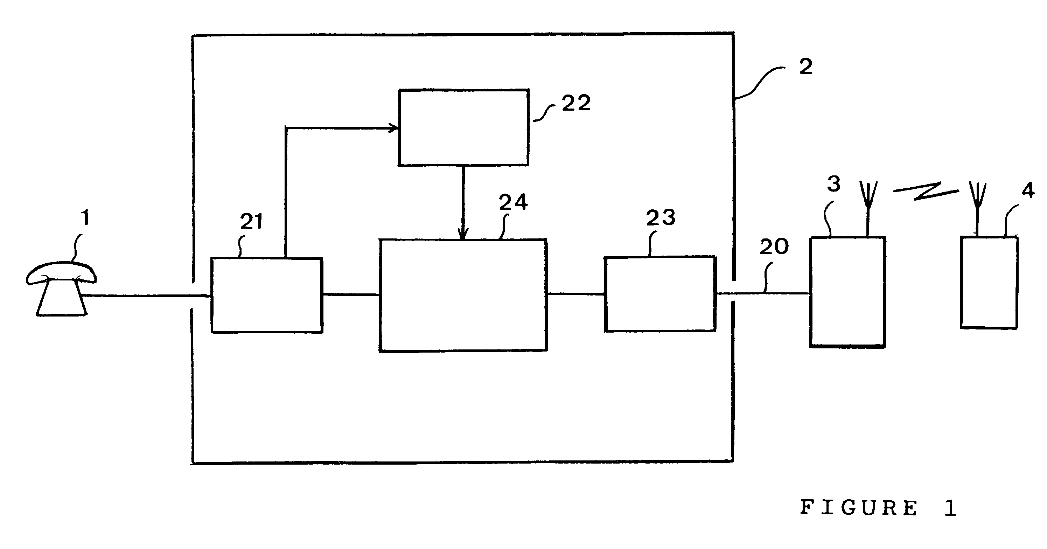

Sur la figure 1 est représenté un système ou réseau téléphonique intégré comportant un réseau téléphonique commuté 2 auquel sont raccordés un poste téléphonique 1 et un équipement de commutation (fonction autocommutateur ou réseau local) 3, de gestion d'une pluralité de terminaux téléphoniques, dont seul le terminal 4 est représenté. L'équipement 3 est ici une base analogique qui gère un réseau local domotique, à transmission radio selon la norme DECT dans cet exemple, reliant au réseau 2 des combinés téléphoniques 4.

Une seule ligne analogique 20 relie dans cet exemple la base 3 à un central téléphonique du réseau RTC 2. Le réseau RTC 2, représenté de façon excessivement schématique en vue de la clarté de l'exposé, comporte un réseau de commutation 24 (en fait les divers centraux maillés entre eux formant le RTC) commandé, à travers un sélecteur de routage 22, par les divers équipements téléphoniques des abonnés, qui sont raccordés dans le réseau 2 à des équipements (de ligne) d'abonné comme 21 et 23, de raccordement du poste 1 et de la ligne 20, respectivement.

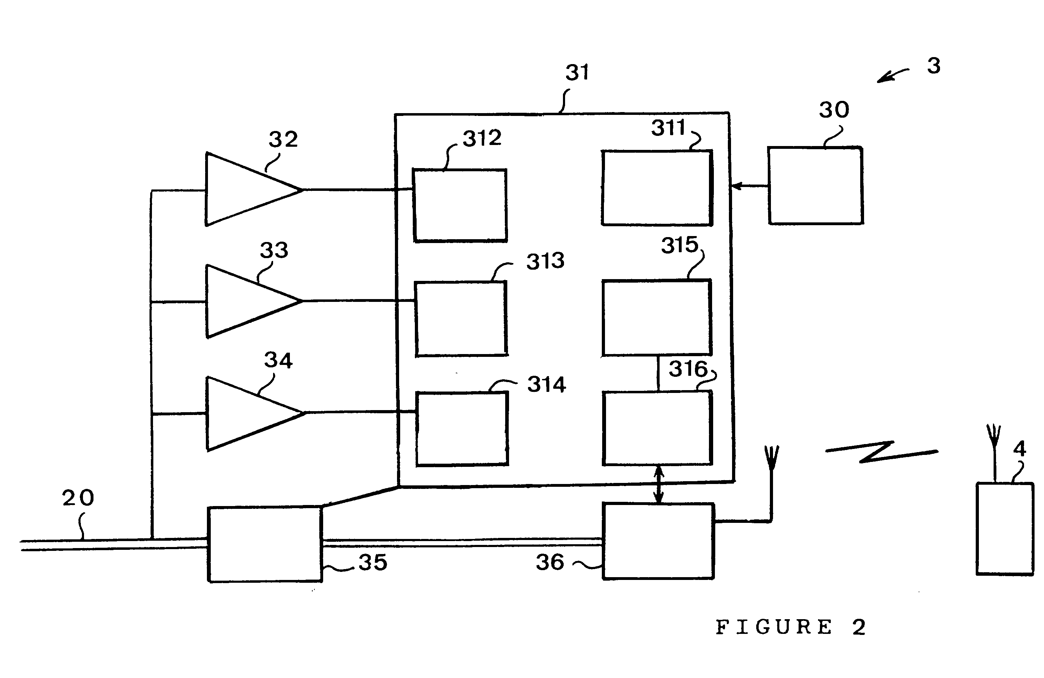

Comme le montre la figure 2, la base 3 comporte une base de temps 30 rythmant le fonctionnement d'une unité centrale 31 à microprocesseur 311. A la ligne 20 sont reliés un récepteur 32 de signaux CLASS, un récepteur 33 de signaux de numérotation, ici DTMF, un récepteur ou détecteur de sonnerie 34 et des circuits d'interface 35 pour prendre la ligne 20 en arrivée et en départ et numéroter. Les circuits 35 sont reliés à des circuits radio 36 pour établir une communication phonique entre la ligne 20 et un combiné comme celui référencé 4, par le réseau domotique à la norme DECT. L'unité centrale 31 est reliée aux divers circuits ci-dessus pour les gérer d'après les signalisations échangées.

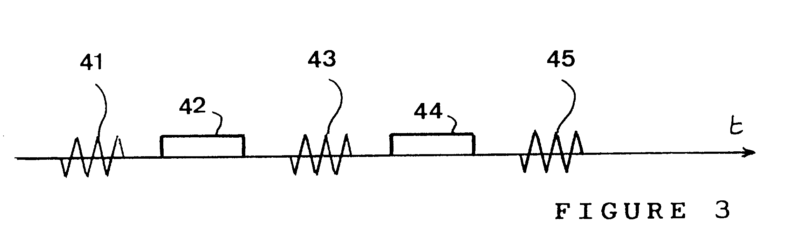

L'unité centrale 31 comporte en outre trois circuits 312, 313 et 314 de réception des signaux logiques issus respectivement des récepteurs 32, 33, 34. Les circuits 312 à 314 permettent d'extraire, des signaux de ligne, des données de divers champs explicités plus loin en référence à la figure 3. L'unité centrale 31 comporte en outre un automate ou séquenceur de renvoi ou redirection des appels entrants 316 commandant le circuit radio 36, d'après des commandes du microprocesseur 311, constituant un ensemble d'extraction et d'analyse de données, qui analyse les signaux des récepteurs 32 à 34, et reçoit en retour, du circuit radio 36 et à travers l'automate 316, des informations de signalisation des combinés 4 pour gérer la base 3. A l'automate 316 est associée une table de correspondance 315 préétablie pour fournir l'adresse physique (voie temporelle d'une trame radio) d'un combiné 4 appelé, en fonction d'un suffixe reçu de la ligne 20.

Le fonctionnement de l'ensemble ou système intégré ci-dessus va maintenant être expliqué plus en détails.

Le RTC 2 est supposé ici fonctionner avec une numérotation à dix chiffres. Lorsque le poste 1 est décroché et qu'il émet une numérotation correspondant au numéro de téléphone de la base 3 par exemple, l'équipement d'abonné 21 fournit celle-ci au sélecteur 22, qui commande les matrices 24 pour établir un chemin phonique et deux chemins ou voies de transmission de signalisation (CLASS; suffixe) jusqu'à l'équipement 23. Comme évoqué plus haut, le dessin n'est que très schématique puisque la matrice 24 est en fait constituée par le maillage de liaisons MIC entre les divers centraux du RTC 2. En particulier, les chemins de signalisation sont en fait temporaires, les signalisations étant ici émises sous forme de paquets adressés à l'équipement 23, par un réseau de canaux de signalisation du genre sémaphore, tel que CCITT No 7.

Lorsque le sélecteur de routage 22 (ou une pluralité de tels sélecteurs partiels en cascade dans divers centraux du RTC 2) a reçu le nombre voulu de dix chiffres, il se verrouille, c'est-à-dire qu'il n'interprète plus les éventuels chiffres suivants, et il commande un aiguillage, ou renvoi, de la numérotation ultérieure sur la matrice 24. Celle-ci constitue, pour le sélecteur 22, un circuit de débordement pour acheminer le suffixe jusqu'à la base 3, suffixe transmis sous forme de données de numérotation complémentaire d'une numérotation d'abonné, c'est-à-dire complémentaire du numéro d'appel de la base 3 elle-même. Par ailleurs, l'équipement d'abonné 21 émet le numéro de téléphone du poste 1 vers la matrice 24.

Les deux signalisations provenant de la matrice 24 sont temporairement mémorisées dans l'équipement d'abonné 23, dans des registres tampons, pour être émises successivement sur la ligne 20, entre des trains de sonnerie, donc dès la phase d'appel. On comprendra que les deux voies de signalisation à travers la matrice 24 ne sont que virtuelles et correspondent en pratique à la transmission de deux (successions de) paquets de données, éventuellement par un même chemin.

La figure 3 illustre la succession des signaux reçus par la base 3 depuis la ligne 20 lors de la phase d'appel (avant une prise de ligne éventuelle par la base 3), signaux émis par l'équipement d'abonné 23 commandant leur séquencement.

Lorsque l'équipement d'abonné 23 reçoit, par le canal sémaphore, une signalisation émise par l'équipement d'abonné 21, il commute cycliquement un relais de sonnerie pendant une durée fixe, ici 1,6 seconde, toutes les 5 secondes, dans la mesure où la ligne 20 est disponible, pour renvoyer celle-ci sur un générateur de tension alternative et y appliquer un train de signaux de sonnerie.

Les références 41, 43 et 45 symbolisent les trains de signaux de sonnerie d'appel correspondants.

Entre les deux premiers trains 41 et 43, l'équipement 23 adresse le registre tampon concerné pour émettre en ligne 20 le numéro de téléphone du poste appelant 1. Entre les deuxième et troisième trains de sonnerie 43 et 45, l'équipement 23 adresse l'autre registre tampon concerné pour émettre en ligne 20 toute numérotation complémentaire provenant de l'équipement 21.

Dans la base 3, l'unité centrale 31 reçoit, par les circuits 312, 313 et 314, la succession des informations correspondantes, détectées par les circuits 32, 33 et 34. Les deux premiers trains de sonnerie 41 et 43 délimitent un premier champ de données 42 dans lequel le numéro de téléphone de l'appelant 1 est lu et affiché sur la base 3 et/ou transmis au combiné 4 pour y être affiché. De même, les deuxième et troisième trains de sonnerie 43 et 45 délimitent un deuxième champ 44 dans lequel se trouve la numérotation complémentaire ou suffixe.

Il est ici prévu de prolonger le deuxième champ 44 par d'autres champs semblables pour détecter la totalité d'une numérotation complémentaire qui comporterait un nombre élevé de chiffres ou qui serait émise avec un retard excessif par l'abonné du poste 1. Le microprocesseur 311 assemble alors, en un numéro complet (suffixe) d'appel du combiné 4, des chiffres provenant de plusieurs paquets reçus, comme 44. En pratique, les récepteurs 32 et 33 sont constitués d'un seul récepteur de données et les champs 42 et 44 qu'il détecte sont identifiés. Bien que chaque type de champ puisse être identifié par comptage des trains de sonnerie qui le précèdent, il est cependant prévu ici un motif spécifique à chacun, ou marqueur, qui sert aussi à cadrer les récepteurs 32, 33 sur la partie utile des données. Après un nombre prédéterminé de trains de sonnerie, donc à l'achèvement d'une temporisation, l'unité centrale 31 arrête toute détection de signaux DTMF. L'un des combinés comme 4 est alors appelé par radio (36) si un suffixe a été reçu et s'il correspond au numéro local du combiné 4.

On peut ainsi, par le format de transmission de la figure 3, rester compatible avec le service CLASS.

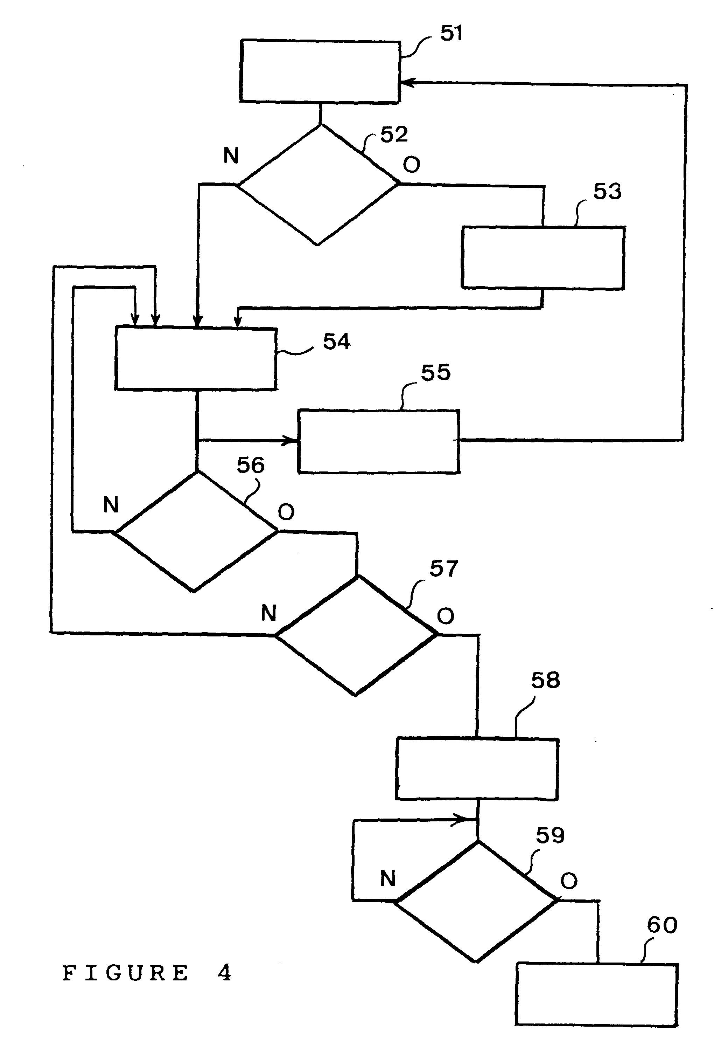

Le diagramme de cheminement de la figure 4 illustre le séquencement du fonctionnement de l'unité centrale 31 et en particulier du microprocesseur 311, qui commande l'automate de renvoi 316 d'après les signalisations reçues de la ligne 20.

A une étape 51, le premier train de sonnerie 41 est détecté puis le champ 42 de service CLASS est lu à une étape 52, pour être affiché (étape 53) si tel est le cas.

A une étape suivante 54, le microprocesseur 311 détecte l'arrivée des trains de sonnerie suivants, comme 43 et 45.

A une étape 55, une temporisation à 5 s remet tout à zéro (étape 51) si un train de sonnerie n'est pas suivi d'un autre train selon la période prévue de 5 s, ce qui indique que le poste 1 a été raccroché prématurément.

A une étape 56 suivant la détection d'un train à l'étape 54, le champ 44 de suffixe, ou signalisation SDA, fourni par le récepteur 33, est lu par le microprocesseur 311 pour, dans ce cas, analyser le suffixe à une étape 57 et commander l'automate 316 pour appeler le combiné 4 correspondant à ce suffixe à une étape 58, si le suffixe est complet. L'automate 316 sélectionne alors une voie temporelle de la trame DECT d'après le suffixe et appelle ainsi le combiné 4 correspondant. Sinon, aux étapes 56 et 57, on reboucle à l'étape 54 de détection de trains de sonnerie.

A une étape 59, rebouclée sur elle-même en l'absence de succès à cette étape, le microprocesseur 311 recherche une réponse par prise de ligne du combiné 4, signalée par radio à travers l'interface 36 qui en informe le microprocesseur 311 par le circuit 316, pour établir la liaison phonique entre le combiné 4 et la ligne 20, à travers les interfaces 35 et 36. Les circuits 35 d'interface de prise de ligne sont alors commandés par le combiné 4, à travers les circuits 36, 316 et 311, pour prendre la ligne 20 (étape 60). Ainsi, dans cet exemple, la base 3 ne répond à l'appel entrant, par prise ou bouclage de la ligne 20, que sur ordre du combiné 4 qui répond. Comme exposé plus haut, il peut être prévu de lire des chiffres du suffixe sur plusieurs champs, si bien que, si un suffixe complet n'est pas détecté à l'étape 57, le rebouclage ci-dessus à l'étape 54 permet de détecter une suite éventuelle de signaux de suffixe, afin d'assembler le tout en un suffixe complet.

L'automate de renvoi 316 consulte la table de correspondance ou transcodage préétablie 315 s'il doit traduire le suffixe reçu en un autre numéro local d'appel de terminal 4 du réseau radio, ou pour choisir la voie temporelle radio qui correspond au combiné 4.

Si aucun suffixe valide n'est reçu, c'est-à-dire si aucun combiné comme 4 ne correspond au suffixe, qui est donc faux ou incomplet, ou si aucun suffixe n'est reçu, le microprocesseur 311 fait sonner un ou plusieurs combinés prédéterminés, ou tous. Il en est de même si la fonction SDA ci-dessus est invalidée par une touche au niveau de la base 3. On peut ainsi par exemple programmer un séquenceur à base de temps du microprocesseur 311 pour renvoyer, la nuit, tous les appels entrants vers un seul combiné 4.

Une liaison téléphonique établie comme exposé ci-dessus peut être utilisée pour transmettre tout type d'informations comme la voix ou les données et, en particulier, le "décrochage" d'un terminal 4 appelé peut être automatique.

## Revendications

1. Base de téléphonie analogique, agencée pour relier une ligne analogique (20) d'un réseau téléphonique (2) à une pluralité de combinés téléphoniques (4) d'un réseau radio domotique, comportant des moyens (32, 33, 34, 132, 133, 134) d'extraction de données d'une numérotation complémentaire d'une numérotation d'abonné, dans des trains de signaux d'appel (41, 43, 45) provenant de la ligne (20), et un automate (316) de redirection d'appels vers les combinés (4), base caractérisée par le fait qu'elle comporte des moyens (311) d'analyse des données extraites, agencés pour commander l'automate (316).

2. Base selon la revendication 1, dans laquelle les moyens d'analyse (311) sont agencés pour assembler, en un numéro complet d'appel d'un combiné (4), des chiffres provenant de plusieurs paquets de données reçus par les moyens d'extraction de données (32, 33, 34, 132, 133, 134).

3. Base selon l'une des revendications 1 et 2, dans laquelle il est prévu des moyens (35) de prise de ligne agencés pour être commandés par les combinés (4).
